# EUROPEAN PATENT SPECIFICATION

(11) **EP 4 089 772 B1**
(45) Date of publication and mention of the grant of the patent: **01.10.2025**
(21) Application number: 21204363.2
(22) Date of filing: 25.10.2021
(51) Int. Cl.: H01M 8/04029

(54) **APPARATUS AND METHOD FOR CONTROLLING DRIVING OF STACK COOLING PUMP OF FUEL CELL SYSTEM**
GERÄT UND VERFAHREN ZUR STEUERUNG DES ANTRIEBS EINER STAPELKÜHLPUMPE EINES BRENNSTOFFZELLENSYSTEMS
APPAREIL ET PROCÉDÉ DE COMMANDE D'ENTRAÎNEMENT DE POMPE DE REFROIDISSEMENT DE PILE D'UN SYSTÈME DE PILE À COMBUSTIBLE

(30) Priority: 14.05.2021 KR 20210062948
(43) Date of publication of application: 16.11.2022
(73) Proprietor: HYUNDAI MOTOR COMPANY, Seoul 06797 (KR); Kia Corporation, Seocho-gu Seoul 06797 (KR)
(72) Inventor: PARK, Chul Wan, 18280 Gyeonggi-do (KR); HAN, Jae Ho, 18280 Gyeonggi-do (KR); OH, Young June, 18280 Gyeonggi-do (KR); LEE, Jin Hun, 18280 Gyeonggi-do (KR); HYUN, Chang Hwa, 18280 Gyeonggi-do (KR)
(74) Representative: Isarpatent

(56) References cited:
- EP-A1- 3 279 991
- US-A1- 2018 034 087

## Description

### BACKGROUND

### (a) Technical Field

The present disclosure relates to an apparatus and method for controlling driving of a stack cooling pump of a fuel cell system, and more particularly to an apparatus and method for controlling driving of a stack cooling pump of a fuel cell system capable of removing air bubbles in a pipe in the state in which the cooling pump is normally driven, after injection of the coolant preventing damage to a stack due to deterioration thereof.

### (b) Background Art

In general, a fuel cell is a type of power generator configured not to convert chemical energy of a fuel into heat through combustion but to convert the chemical energy of the fuel into electrical energy through electrochemical reaction in a fuel cell stack. The fuel cell may be used not only to supply electric power for industrial use, home use, and vehicle driving but also to supply electric power to small electric/electronic products, particularly portable devices.

As an example of the fuel cell, a polymer electrolyte membrane fuel cell or a proton exchange membrane fuel cell (PEMFC), much research on which has been conducted as a power source for vehicle driving, includes a membrane-electrode assembly configured such that catalyst electrode layers, at which an electrochemical reaction occurs, are attached to opposite sides of an electrolyte membrane, through which protons move, a gas diffusion layer configured to uniformly distribute reaction gases and to transfer generated electrical energy, a gasket and a fastening device configured to maintain airtightness and proper fastening pressure of the reaction gases and a coolant, and a bipolar plate configured to move the reaction gases and the coolant.

In a stack of a fuel cell system for vehicles, a cooling channel is not sufficiently wide, and, in the case in which particles or foreign matter is generated in a bearing, the foreign matter or the particles are accumulated in an inner space, whereby the particles or the foreign matter in the stack inversely affects stack cooling. Consequently, a plastic bearing must be used to prevent generation of foreign matter.

Durability of the plastic bearing is determined based on an operating environment, number of rotations, driving force, and operating time. Thereamong, the operating environment, i.e. whether the plastic bearing is in water or in air, inversely affects durability of the plastic bearing. When the operating time is increased, the temperature of the bearing is increased, whereby durability of the plastic bearing is inversely affected. In addition, the number of rotations and the driving force are related to each other (when the number of rotations is reduced, the driving force is also reduced).

Normally, the specifications of the bearing are selected by calculating a PV (pressure*velocity) value determined according to driving force and the number of rotations at the maximum performance. For each specification, the PV limit value of the plastic bearing in water is 4 times the PV limit value of the plastic bearing in air. When a PV value based on a surrounding environment is calculated, design is performed such that the PV value is equal to or less than a PV value in water to prevent over-specifications. When a coolant is generally injected into a complicated fuel cell system for vehicles, however, the circumference of the bearing may be in air. When the stack cooling pump is driven in this state, durability of the plastic bearing may be seriously deteriorated.

US 2018/0034087 A1 describes a method of controlling a fuel cell system including a fuel cell.

EP 3279991 A1 describes a fuel cell system.

The above information disclosed in this section is provided merely for enhancement of understanding of the background of the invention and therefore it may contain information that does not form the prior art that is already known in this country to a person of ordinary skill in the art.

### SUMMARY

The present invention has been made in an effort to solve the above-described problems associated with the prior art. It is an object of the present invention to provide an apparatus and method for controlling driving of a stack cooling pump of a fuel cell system capable of performing control such that the cooling pump is driven in a pre-run mode, in which the cooling pump is driven normally, i.e. a bearing of the cooling pump is sufficiently immersed in the coolant, after injection of the coolant, and then the cooling pump is driven in an air bubble removal mode, whereby it is possible to effectively remove air bubbles, and therefore it is possible to prevent damage to a stack due to deterioration thereof and to prevent damage to the bearing.

The objects of the present invention are not limited to that described above. The objects of the present invention will be clearly understood from the following description of embodiments and could be implemented by means defined in the claims and a combination thereof.

The invention is set out in the appended set of claims.

In order to accomplish the object, in an aspect, the present invention provides an apparatus for controlling driving of a stack cooling pump of a fuel cell system according to claim 1. The pre-run mode may be set such that the driving time of the cooling pump in an on state is limited to a minimum of about 2 seconds or more and the number of rotations of the cooling pump is limited to about 50% or less the rated number of rotations of the cooling pump. The air bubble removal mode may be set such that the cooling pump is driven at a possible minimum number of rotations or the rated number of rotations and is continuously in an on state.

In another aspect, the present invention provides a method of controlling driving of a stack cooling pump of a fuel cell system according to claim 4. The pre-run mode may be set such that the driving time of the cooling pump in an on state is limited to a minimum of about 2 seconds or more and the number of rotations of the cooling pump is limited to about 50% or less the rated number of rotations of the cooling pump.

The air bubble removal mode may be set such that the cooling pump is driven at a possible minimum number of rotations or the rated number of rotations and is continuously in an on state. Driving current of the cooling pump may be measured, a determination may be made that the cooling pump is driven normally, and the air bubble removal driving step may be selectively performed only when a normal signal is generated.

### BRIEF DESCRIPTION OF THE DRAWINGS

The above and other features of the present invention will now be described in detail with reference to certain exemplary embodiments thereof illustrated in the accompanying drawings which are given hereinbelow by way of illustration only, and thus are not limitative of the present invention, and wherein:
FIG. 1 is a view schematically showing an apparatus for controlling driving of a stack cooling pump of a fuel cell system according to an embodiment of the present invention;
FIG. 2 is a view showing the state in which the cooling pump is driven in a pre-run mode in the apparatus for controlling driving of the stack cooling pump of the fuel cell system according to the embodiment of the present invention;
FIG. 3 is a view showing the state in which the cooling pump is driven in an air bubble removal mode in the apparatus for controlling driving of the stack cooling pump of the fuel cell system according to the embodiment of the present invention;
FIGS. 4A-4D are views showing the results of tests for determining whether the cooling pump is normally driven in the apparatus for controlling driving of the stack cooling pump of the fuel cell system according to the embodiment of the present invention;
FIG. 5 is a flowchart showing a method of controlling driving of a stack cooling pump of a fuel cell system according to another embodiment of the present invention; and
FIG. 6 is a view showing a conventional fuel cell system.

It should be understood that the appended drawings are not necessarily to scale, presenting a somewhat simplified representation of various preferred features illustrative of the basic principles of the invention. The specific design features of the present invention as disclosed herein, including, for example, specific dimensions, orientations, locations, and shapes, will be determined in part by the particular intended application and use environment.

In the figures, reference numbers refer to the same or equivalent parts of the present invention throughout the several figures of the drawing.

### DETAILED DESCRIPTION

Reference will now be made in detail to various embodiments of the present invention, examples of which are illustrated in the accompanying drawings and described below. Advantages and features of the present invention and a method of accomplishing the same will be clearly understood from the following embodiments with reference to the attached drawings.

However, the present invention may be embodied in many different forms and should not be construed as limited to the embodiments set forth herein. Rather, these embodiments are provided so that the present invention will be thorough and complete, and will fully convey the scope of the present invention to those skilled in the art. The present invention is defined only by the category of the claims. Also, in describing the present invention, a detailed description of known technologies related thereto will be omitted when the same may obscure the subject matter of the present invention.

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, combustion, plug-in hybrid electric vehicles, hydrogen-powered vehicles and other alternative fuel vehicles (e.g. fuels derived from resources other than petroleum).

Although exemplary embodiment is described as using a plurality of units to perform the exemplary process, it is understood that the exemplary processes may also be performed by one or plurality of modules. Additionally, it is understood that the term controller/control unit refers to a hardware device that includes a memory and a processor and is specifically programmed to execute the processes described herein. The memory is configured to store the modules and the processor is specifically configured to execute said modules to perform one or more processes which are described further below.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Unless specifically stated or obvious from context, as used herein, the term "about" is understood as within a range of normal tolerance in the art, for example within 2 standard deviations of the mean. "About" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

In general, hydrogen, which is a fuel, and oxygen (air), which is an oxidizer, are supplied respectively to an anode and a cathode of a membrane-electrode assembly via a flow channel of a bipolar plate in a fuel cell. The hydrogen is supplied to the anode (also referred to as a fuel electrode, a hydrogen electrode, or an oxidation electrode), and the oxygen (air) is supplied to the cathode (also referred to as an air electrode, an oxygen electrode, or a reduction electrode).

The hydrogen supplied to the anode is decomposed into protons (H+) and electrons (e-) by catalysts of electrode layers provided on opposite sides of an electrolyte membrane. The protons are selectively transferred to the cathode through the electrolyte membrane, which is a cation exchange membrane, and the electrons are transferred to the cathode through a gas diffusion layer, which is a conductor, and the bipolar plate.

At the cathode, the protons supplied through the electrolyte membrane and the electrons transferred through the bipolar plate join oxygen in air supplied to the cathode by an air supply device, whereby water is generated. The electrons flow through an external conductor due to movement of the protons occurring at this time, and electric current is generated as the result of flow of the electrons.

Meanwhile, a fuel cell system provided in a vehicle mainly includes a fuel cell stack configured to generate electrical energy, a fuel supply device configured to supply a fuel (hydrogen) to the fuel cell stack, an air supply device configured to supply oxygen in air, which is an oxidizer necessary for an electrochemical reaction, to the fuel cell stack, and a thermal management system (TMS) configured to dissipate reaction heat of the fuel cell stack out of the system and to control operating temperature of the fuel cell stack.

In the fuel cell system constructed as described above, electricity is generated through an electrochemical reaction between hydrogen, which is a fuel, and oxygen in air, and heat and water are discharged as reaction by-products. Since heat is particularly generated as a reaction by-product in the fuel cell system, a cooling device configured to cool the stack is essential in order to prevent an increase in temperature of the stack.

When a cooling pump 120 applied to such a cooling device is operated, foreign matter or particles are generated due to wear thereof, whereby coolant conductivity and the stack are inversely affected. Consequently, a plastic bearing must be used instead of a carbon bearing for electric water pumps. However, the plastic bearing may be worn due to the material characteristics thereof depending on an air state, i.e. in the state in which sufficient coolant is not injected into the circumference of the bearing, when the cooling pump 120 is operated at a specific number of rotations or more or is operated for a long time.

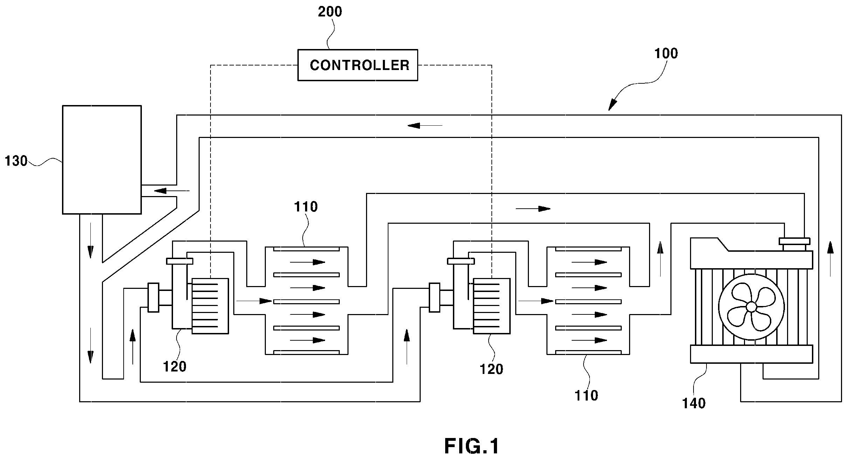

When a coolant is initially injected at the time of delivery of a vehicle or in the state in which the coolant is completely discharged for repair, therefore, the coolant is supplied to the circumference of the bearing before air bubbles generated in a pipe are removed, whereby it is possible to prevent damage to the plastic bearing. Accordingly, as shown in FIG. 1, an apparatus for controlling driving of a stack cooling pump of a fuel cell system according to an embodiment of the present invention includes a cooling unit 100 and a controller 200.

The cooling unit 100 includes a fuel cell stack 110 installed in a fuel cell vehicle, a cooling pump 120 configured to move a coolant, more specifically to pump the coolant to a radiator 140 to supply the coolant to the fuel cell stack 110, and a reservoir 130 configured to allow the coolant moving toward the cooling pump 120 to be injected thereinto. In particular, the cooling unit 100 is shown as including a plurality of fuel cell stacks 110 and a cooling pump 120 in FIG. 1, which is merely an example provided to express a complicated fuel cell system for vehicles, and the present invention is not limited thereto.

When the coolant is injected into the reservoir 130, the controller 200 is configured to sequentially drive or operate the cooling pump 120 in a predetermined pre-run mode and a predetermined air bubble removal mode. In particular, the pre-run mode is a mode in which the cooling pump is repeatedly turned on/off in the state in which the driving time and number of rotations of the cooling pump are limited such that the circumference of the bearing installed in the cooling pump 120 is sufficiently immersed in the coolant.

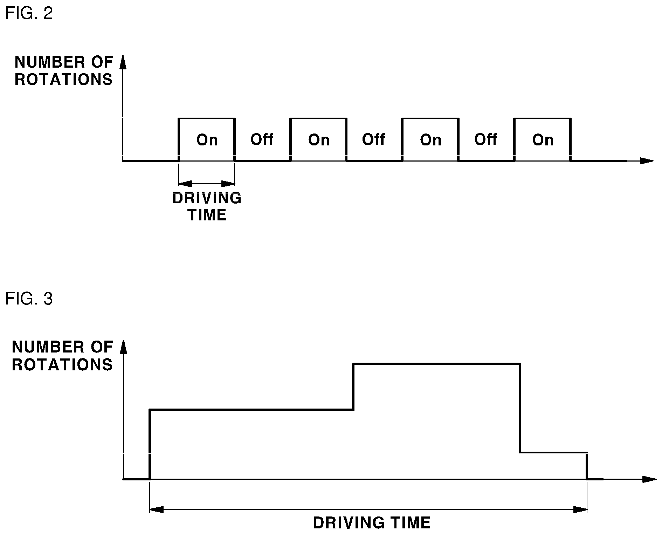

In other words, in the pre-run mode, as shown in FIG. 2, the cooling pump 120 is repeatedly turned on/off at the same RPM for a short time such that the coolant is sufficiently injected into the bearing. The driving time and number of rotations are set. For example, the pre-run mode may be set such that the driving time is limited to a minimum of about 2 seconds or more, and the number of rotations is limited to about 50% or less the rated number of rotations of the cooling pump 120.

Normally, the specifications of the bearing are selected by calculating a PV (pressure*velocity) value determined according to driving force and the number of rotations at the maximum performance. In general, the PV limit value of the plastic bearing in water is 4 times the PV limit value of the plastic bearing in air. In other words, in the pre-run mode, the bearing is rotated in air, and therefore the number of rotations in the pre-run mode is set in consideration of rotation of the bearing in air.

In consideration of the fact that the PV limit value in air is 25% the PV limit value in water, therefore, the rated number of rotations (commonly the maximum number of rotations) corresponding to V is within 25%. Since the P value, which corresponds to driving force, of the total PV value, is also reduced in consideration of correlation between the number of rotations and driving force, however, it is preferable for the number of rotations to be set to 50% or less the rated number of rotations. In particular, the lower limit of the number of rotations must be set to 5% or more the rated number of rotations. The reason for this is that a number of rotations of 5% or more is needed to provide the minimum pressure difference necessary to immerse the bearing in water, which is the purpose of the pre-run mode.

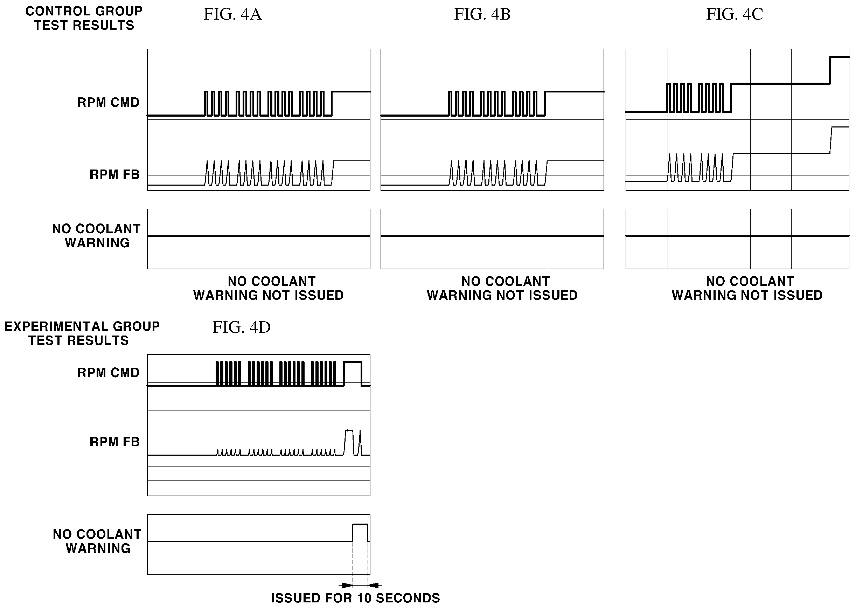

In addition, it is preferable for the driving time to be limited to a minimum of 2 seconds or more. As an example, as shown in FIG. 4, tests were performed under the condition that the cooling pump 120 was driven at the same RPM, i.e. approximately 2800 RPM, which was 50% or less the rated number of rotations (6000 RPM), as previously described, for all (a), (b), (c), and (d), that on time was 3 seconds at the time of on/off repetition for (a), (b), and (c), and that on time was 1 second at the time of on/off repetition for (d), and the results thereof revealed that no signal according to a decrease in the driving current of the cooling pump 120 was output, i.e. the cooling pump was not normally driven, only for (d). Preferably, therefore, the driving time is limited to a minimum of 2 seconds or more.

As a result, in consideration of durability of the bearing, it is preferable for the driving time of the cooling pump 120 necessary to switch the state of the bearing from the air state to the water state to be set to a minimum of 2 seconds or more and for the number of rotations to be set to 50% or less the rated number of rotations of the cooling pump 120.

In a complicated fuel cell system for vehicles, therefore, the circumference of the bearing may be in air at the time of general injection of a coolant. When the cooling pump 120 is driven in this state, durability of the bearing may be seriously affected. Consequently, the controller 200 may be configured to operate the cooling pump 120 in the air bubble removal mode in the state in which the circumference of the bearing is in water through driving in the pre-run mode, whereby it is possible to prevent damage to the bearing and to effectively remove air bubbles in a cooling pipe, and therefore it is possible to prevent damage to the stack due to deterioration thereof.

In the driving of the cooling pump 120 in the pre-run mode, the controller 200 may be configured to measure driving current, and in the case in which no signal according to a decrease in driving current is output (see FIG. 4), i.e. in response to determining that there is a normal driving environment, i.e. the circumference of the bearing is in water, the controller may be configured to selectively operate the cooling pump 120 is selectively driven in the air bubble removal mode. In particular, the air bubble removal mode is set such that the cooling pump 120 may be driven at a possible minimum number of rotations or the rated number of rotations and is continuously in an on state.

In other words, the air bubble removal mode is set such that the cooling pump 120 is not repeatedly turned on/off but is continuously in an on state, unlike the pre-run mode, and such that, as shown in FIG. 3, the cooling pump 120 may be driven at a possible minimum number of rotations, the rated number of rotations, or a number of rotations therebetween. As a result, in the air bubble removal mode, the cooling pump 120 is not driven according to predetermined rules but the cooling pump 120 is driven in the state in which the number of rotations is repeatedly decreased and increased after the circumference of the bearing is in water through the pre-run mode, whereby it is possible to effectively remove air bubbles in the cooling pipe.

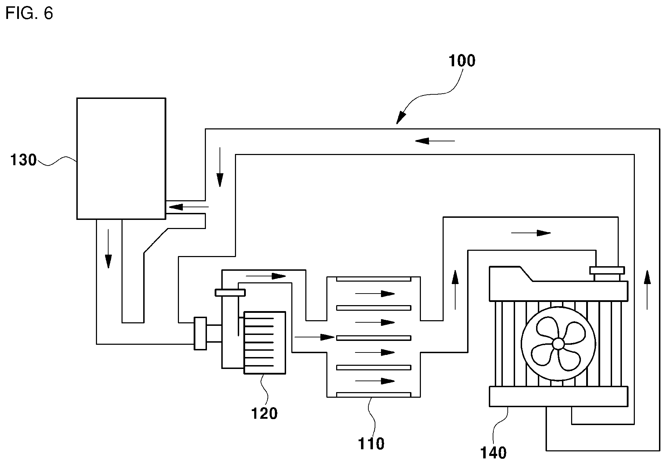

The structure of a conventional fuel cell system is relatively simple (see FIG. 6). Even in the state in which no coolant is sufficiently injected into the circumference of the bearing, therefore, the cooling pump 120 may be driven in the air bubble removal mode. In recent years, however, the structure of the fuel cell system has been complicated due to pipe layout change, and therefore it may be difficult to control air bubbles in the pipe only in the air bubble removal mode.

In addition, when air bubbles in the pipe are removed only through the air bubble removal mode, the plastic bearing may be worn as the result of being operated in the air state at a specific number of rotations for a predetermined time. As a result, air bubbles in the pipe are not removed, whereby smooth heat dissipation may be inhibited, and therefore damage due to deterioration may occur.

When a coolant is initially injected at the time of delivery of a vehicle or in the state in which the coolant is completely discharged for repair, therefore, the coolant is supplied to the bearing through the pre-run mode before air bubbles generated in the pipe are removed, whereby it is possible to prevent damage to the plastic bearing.

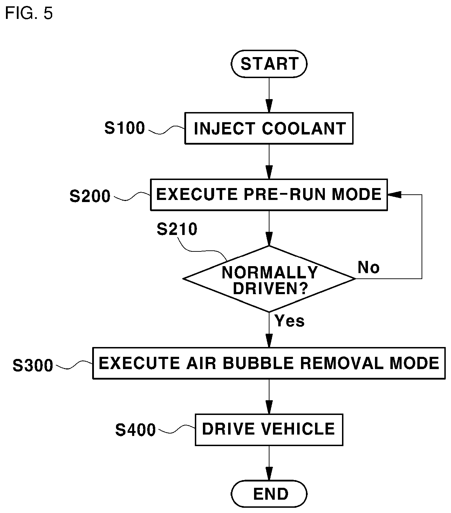

Meanwhile, a control method based on the apparatus for controlling driving of the stack cooling pump of the fuel cell system described above will be described with reference to FIG. 5. First, at the time of delivery of a vehicle or in the state in which a coolant is completely discharged for repair, a coolant is injected into the reservoir 130 before the vehicle is driven (S100).

When the coolant is injected into the reservoir 130 (S100), driving of the cooling pump 120 is executed in a predetermined pre-run mode (S200). In particular, the pre-run mode is a mode in which the cooling pump is repeatedly turned on/off in the state in which the driving time and number of rotations of the cooling pump are limited such that the bearing installed in the cooling pump 120 is sufficiently immersed in the coolant.

In other words, in the pre-run mode, as shown in FIG. 2, the cooling pump 120 may be repeatedly turned on/off at the same RPM for a short time such that the coolant is sufficiently injected into the bearing. The driving time and number of rotations are set. Preferably, the driving time may be set to a minimum of 2 seconds or more, and the number of rotations may be set to 50% or less the rated number of rotations of the cooling pump 120. Set values of the driving time and the number of rotations in the pre-run mode were described in detail in connection with the controller 200, and a description thereof will be omitted.

Subsequently, the pre-run mode is performed (S200), and whether the cooling pump 120 is normally driven may be determined (S210). In response to determining that the cooling pump is driven normally, the cooling pump 120 is driven in a predetermined air bubble removal mode (S300), and then the vehicle may be driven (S400). The air bubble removal mode may be set such that the cooling pump 120 is not repeatedly turned on/off but is continuously in an on state, unlike the pre-run mode, and such that, as shown in FIG. 3, the cooling pump 120 may be driven at a possible minimum number of rotations, the rated number of rotations, or a number of rotations therebetween.

Additionally, in the driving of the cooling pump 120 in the pre-run mode, the controller 200 may be configured to measure driving current, and when no signal according to a decrease in driving current is output (see FIG. 4), i.e. in response to determining that there is a normal driving environment, i.e. the circumference of the bearing is in water, the controller may be configured to selectively drive the cooling pump 120 in the air bubble removal mode.

When the driving current is measured and a signal according to a decrease in driving current is output (see FIGS. 4A-4D), which means that the circumference of the bearing is still in air, a determination is made that the pump is not driven normally (S210), the driving time of the cooling pump 210 in the on state may be increased or the number of rotations of the cooling pump may be increased in the pre-run mode such that the circumference of the bearing is in water before driving in the air bubble removal mode is performed.

After injection of the coolant, control is performed such that the cooling pump is driven in the pre-run mode, in which the cooling pump is normally driven, i.e. the bearing of the cooling pump is immersed in the coolant, and then the cooling pump is driven in the air bubble removal mode, whereby it is possible to effectively remove air bubbles, and therefore it is possible to prevent damage to the stack due to deterioration thereof.

Additionally, when the plastic bearing is applied to the cooling pump to prevent generation of foreign matter, such as particles, the air bubble removal mode is executed in the state in which the bearing is immersed in the coolant, whereby it is possible to prevent damage to the bearing that occurs when the cooling pump is driven in the state in which the bearing is in air.

In addition, the cooling pump may be driven in the air bubble removal mode after the cooling pump is driven in the pre-run mode, whereby it is possible for the present invention to be applied to a fuel cell system in which a cooling pump is not normally driven under general coolant injection conditions, in other words using a method of injecting a coolant into a reservoir through a coolant injection port using gravity based on an installation environment without the provision of separate outer equipment.

As is apparent from the foregoing, the present invention has an effect in that, after injection of the coolant, the cooling pump is driven in the pre-run mode, in which the cooling pump is normally driven, i.e. the bearing of the cooling pump is immersed in the coolant, and then the cooling pump is driven in the air bubble removal mode, whereby it is possible to effectively remove air bubbles, and therefore it is possible to prevent damage to the stack due to deterioration thereof.

In addition, the present invention has an effect in that, in the case in which the plastic bearing is applied to the cooling pump to prevent generation of foreign matter, such as particles, the air bubble removal mode is executed in the state in which the bearing is immersed in the coolant, whereby it is possible to prevent damage to the bearing that occurs in the case in which the cooling pump is driven in the state in which the bearing is in air.

The present invention also has an effect in that the cooling pump is driven in the air bubble removal mode after the cooling pump is driven in the pre-run mode, whereby it is possible for the present invention to be applied to a fuel cell system in which a cooling pump is not normally driven under general coolant injection conditions, in other words using a method of injecting a coolant into a reservoir through a coolant injection port using gravity depending on an installation environment without the provision of separate outer equipment.

Although the present invention has been described with reference to the embodiment(s) shown in the drawings, which are merely illustrative, and those skilled in the art will understand that various modifications are possible therefrom and all or some of the embodiment(s) may be selectively combined. Therefore, the real technical protection scope of the present invention is defined by the appended claims.

## Claims

1. An apparatus for controlling driving of a stack cooling pump of a fuel cell system, the apparatus comprising:
a cooling unit (100) including a fuel cell stack (110) installed in a fuel cell vehicle, a cooling pump (120) configured to move a coolant, and a reservoir (130) configured to allow the coolant moving toward the cooling pump (120) to be injected thereinto; and
a controller (200) configured to sequentially operate the cooling pump (120) in a predetermined pre-run mode and a predetermined air bubble removal mode when the coolant is injected into the reservoir (130),
wherein the pre-run mode is set as a mode in which the cooling pump (120) is repeatedly turned on or off in a state in which a driving time and a number of rotations of the cooling pump (120) are limited to immerse a bearing installed in the cooling pump (120) in the coolant.

2. The apparatus according to claim 1, wherein the pre-run mode is set to limit the driving time of the cooling pump (120) in an on state to a minimum of 2 seconds or more and the number of rotations of the cooling pump (120) is limited to 50% or less a rated number of rotations of the cooling pump (120).

3. The apparatus according to claim 1, wherein the air bubble removal mode is set such that the cooling pump (120) is driven at a possible minimum number of rotations or a rated number of rotations and is continuously in an on state.

4. A method of controlling driving of a stack cooling pump of a fuel cell system, the method comprising:
injecting a coolant into a reservoir (130);
operating the cooling pump (120) in a predetermined pre-run mode according to injection of the coolant into the reservoir (130); and
determining whether the cooling pump (120) is driven normally in the pre-run mode and, in response to determining that the cooling pump (120) is normally driven, operating the cooling pump (120) in a predetermined air bubble removal mode
wherein the pre-run mode is set as a mode in which the cooling pump (120) is repeatedly turned on and off in a state in which a driving time and a number of rotations of the cooling pump (120) are limited to immerse a bearing installed in the cooling pump (120) in the coolant.

5. The method according to claim 4, wherein the pre-run mode is set to limit the driving time of the cooling pump (120) in an on state to a minimum of 2 seconds or more and the number of rotations of the cooling pump (120) is limited to 50% or less a rated number of rotations of the cooling pump (120).

6. The method according to claim 4, wherein the air bubble removal mode is set to drive the cooling pump (120) at a possible minimum number of rotations or a rated number of rotations and is continuously in an on state.

7. The method according to claim 4, wherein driving current of the cooling pump (120) is measured, a determination is made that the cooling pump (120) is normally driven, and the air bubble removal driving step is selectively performed only when a normal signal is generated.

## Patentansprüche

1. Vorrichtung zum Steuern eines Antriebs einer Stapelkühlpumpe eines Brennstoffzellensystems, wobei die Vorrichtung umfasst:
eine Kühleinheit (100), die einen Brennstoffzellenstapel (110) aufweist, der in einem Brennstoffzellenfahrzeug installiert ist, eine Kühlpumpe (120), die eingerichtet ist, um ein Kühlmittel zu bewegen, und einen Behälter (130), der eingerichtet ist, um zu ermöglichen, dass das Kühlmittel, das sich in Richtung der Kühlpumpe (120) bewegt, in diesen eingespritzt wird; und
eine Steuerung (200), die eingerichtet ist, um die Kühlpumpe (120) sequenziell in einem vorbestimmten Vorlaufmodus und einem vorbestimmten Luftblasenentfernungsmodus zu betreiben, wenn das Kühlmittel in den Behälter (130) eingespritzt wird,
wobei der Vorlaufmodus als ein Modus festgelegt ist, in dem die Kühlpumpe (120) wiederholt ein- oder ausgeschaltet wird, in einem Zustand, in dem eine Antriebszeit und eine Drehzahl der Kühlpumpe (120) begrenzt sind, um ein Lager, das in der Kühlpumpe (120) installiert ist, in das Kühlmittel einzutauchen.

2. Vorrichtung nach Anspruch 1, wobei der Vorlaufmodus so festgelegt ist, dass die Antriebszeit der Kühlpumpe (120) in einem eingeschalteten Zustand auf mindestens 2 Sekunden oder mehr begrenzt ist und die Drehzahl der Kühlpumpe (120) auf 50 % oder weniger einer Nenndrehzahl der Kühlpumpe (120) begrenzt ist.

3. Vorrichtung nach Anspruch 1, wobei der Luftblasenentfernungsmodus derart festgelegt ist, dass die Kühlpumpe (120) mit einer minimal möglichen Drehzahl oder einer Nenndrehzahl angetrieben wird und kontinuierlich in einem eingeschalteten Zustand ist.

4. Verfahren zum Steuern eines Antriebs einer Stapelkühlpumpe eines Brennstoffzellensystems, wobei das Verfahren umfasst:
Einspritzen eines Kühlmittels in einen Behälter (130);
Betreiben der Kühlpumpe (120) in einem vorbestimmten Vorlaufmodus gemäß einer Einspritzung des Kühlmittels in den Behälter (130); und
Bestimmen, ob die Kühlpumpe (120) in dem Vorlaufmodus normal angetrieben wird, und als Reaktion auf das Bestimmen, dass die Kühlpumpe (120) normal angetrieben wird, Betreiben der Kühlpumpe (120) in einem vorbestimmten Luftblasenentfernungsmodus
wobei der Vorlaufmodus als ein Modus festgelegt ist, in dem die Kühlpumpe (120) wiederholt ein- und ausgeschaltet wird, in einem Zustand, in dem eine Antriebszeit und eine Drehzahl der Kühlpumpe (120) begrenzt sind, um ein Lager, das in der Kühlpumpe (120) installiert ist, in das Kühlmittel einzutauchen.

5. Verfahren nach Anspruch 4, wobei der Vorlaufmodus so festgelegt ist, dass die Antriebszeit der Kühlpumpe (120) in einem eingeschalteten Zustand auf mindestens 2 Sekunden oder mehr begrenzt ist und die Drehzahl der Kühlpumpe (120) auf 50 % oder weniger einer Nenndrehzahl der Kühlpumpe (120) begrenzt ist.

6. Verfahren nach Anspruch 4, wobei der Luftblasenentfernungsmodus festgelegt ist, um die Kühlpumpe (120) mit einer minimal möglichen Drehzahl oder einer Nenndrehzahl anzutreiben und kontinuierlich in einem eingeschalteten Zustand ist.

7. Verfahren nach Anspruch 4, wobei ein Antriebsstrom der Kühlpumpe (120) gemessen wird, eine Bestimmung vorgenommen wird, dass die Kühlpumpe (120) normal angetrieben wird, und der Luftblasenentfernungs-Antriebsschritt selektiv nur dann durchgeführt wird, wenn ein Normalsignal erzeugt wird.

## Revendications

1. Appareil de commande d'entraînement d'une pompe de refroidissement de pile d'un système de pile à combustible, l'appareil comprenant :
une unité de refroidissement (100) comportant une pile à combustible (110) installée dans un véhicule à pile à combustible, une pompe de refroidissement (120) conçue pour déplacer un fluide de refroidissement, et un réservoir (130) conçu pour permettre au fluide de refroidissement de se déplacer vers la pompe de refroidissement (120) pour y être injecté ; et
un organe de commande (200) conçu pour faire fonctionner de manière séquentielle la pompe de refroidissement (120) dans un mode préliminaire prédéfini et un mode de retrait de bulles d'air prédéfini lorsque le fluide de refroidissement est injecté dans le réservoir (130),
dans lequel le mode préliminaire est réglé comme un mode dans lequel la pompe de refroidissement (120) est mise en marche ou arrêtée de manière répétée dans un état dans lequel un temps d'entraînement et un nombre de tours de la pompe de refroidissement (120) sont limités pour plonger un palier qui est installé dans la pompe de refroidissement (120) dans le fluide de refroidissement.

2. Appareil selon la revendication 1, dans lequel le mode préliminaire est réglé pour limiter le temps d'entraînement de la pompe de refroidissement (120) dans un état de marche à un minimum de 2 secondes ou plus et le nombre de tours de la pompe de refroidissement (120) est limité à 50 % ou moins du nombre de tours nominal de la pompe de refroidissement (120).

3. Appareil selon la revendication 1, dans lequel le mode de retrait de bulles d'air est réglé de telle sorte que la pompe de refroidissement (120) est entraînée à un nombre minimal possible de tours ou à un nombre de tours nominal et est en permanence dans un état de marche.

4. Procédé de commande d'entraînement d'une pompe de refroidissement de pile d'un système de pile à combustible, le procédé comprenant les étapes consistant à :
injecter un fluide de refroidissement dans un réservoir (130) ;
faire fonctionner la pompe de refroidissement (120) dans un mode préliminaire prédéfini selon une injection de fluide de refroidissement dans le réservoir (130) ; et
déterminer si la pompe de refroidissement (120) est entraînée normalement dans le mode préliminaire et, en réponse au fait que la pompe de refroidissement (120) est déterminée comme entraînée normalement, faire fonctionner la pompe de refroidissement (120) dans un mode de retrait de bulles d'air prédéfini
dans lequel le mode préliminaire est réglé comme un mode dans lequel la pompe de refroidissement (120) est mise en marche et arrêtée de manière répétée dans un état dans lequel un temps d'entraînement et un nombre de tours de la pompe de refroidissement (120) sont limités pour plonger un palier qui est installé dans la pompe de refroidissement (120) dans le fluide de refroidissement.

5. Procédé selon la revendication 4, dans lequel le mode préliminaire est réglé pour limiter le temps d'entraînement de la pompe de refroidissement (120) dans un état de marche à un minimum de 2 secondes ou plus et le nombre de tours de la pompe de refroidissement (120) est limité à 50 % ou moins du nombre de tours nominal de la pompe de refroidissement (120).

6. Procédé selon la revendication 4, dans lequel le mode de retrait de bulles d'air est réglé de façon que la pompe de refroidissement (120) est entraînée à un nombre minimal possible de tours ou à un nombre de tours nominal et est en permanence dans un état de marche.

7. Procédé selon la revendication 4, dans lequel le courant d'entraînement de la pompe de refroidissement (120) est mesuré, le fait que la pompe de refroidissement (120) soit normalement entraînée est déterminé et l'étape d'entraînement de retrait de bulles d'air est effectuée de manière sélective uniquement quand un signal normal est généré.
